# EUROPEAN PATENT APPLICATION

(11) **EP 1 212 945 A2**
(43) Date of publication of application: **12.06.2002**
(21) Application number: 01310221.5
(22) Date of filing: 06.12.2001
(51) Int. Cl.: A23C 9/152, A23C 9/154, A23C 11/10

(54) **Dairy-based beverages fortified with cholesterol lowering agents**

(30) Priority: 07.12.2000 US 251778 P; 20.11.2001 US 989617
(71) Applicant: McNeil-PPC, Inc., Skillman, NJ 08558-9418 (US)
(72) Inventor: Boyer, Marie, Fort Washington, PA 19034 (US); Hardie-Muncy, Darlene, Ringoes, NJ 08551 (US); Hirasuna, Thomas Jyun, Ithaca, NY 14850 (US); Myers, Scott, Lansing, NY 14882 (US); Roden, Allan, Nobelsville, IN 46060 (US); Sharma, Shri Kant, Ithaca, NY 14850 (US)
(74) Representative: Mercer, Christopher Paul

(57) **Abstract**

A dairy-based beverage including a stanol ester in an amount of from about 0.2 to about 2.0 wt. % of the beverage and, optionally, an additional ingredient selected from a stabilizer, a weighing agent, an emulsifier, and mixtures thereof, wherein each additional ingredient is in an amount of from about 0.01 to about 0.05 wt % of the beverage.

## Description

### FIELD OF THE INVENTION

This invention relates to the incorporation of cholesterol-lowering agents into dairy-based beverages.

### Background of the Invention

Human clinical studies have shown that stanol esters in the diet significantly lower cholesterol levels in individuals, thus further reducing the risk of coronary heart disease. On September 8, 2000, the U.S. Food and Drug Administration began authorizing the use, on food labels and in food labeling, of health claims on the association between plant sterol/stanol esters and reduced risk of coronary heart disease (CHD). 65 FR 54685, September 8, 2000. In particular, it was determined that ingestion of 3.4 grams of stanol ester every day for at least two weeks was proven to lower LDL cholesterol levels up to 14% without an adverse effect on HDL levels.

The properties of phytosterols and especially those of stanol esters make them particularly unsuited toward formulation into traditional beverage forms. The poor wettability of these compounds makes them difficult to incorporate into aqueous based forms such as liquids. Additionally, their high melting point and waxy properties make them difficult to process.

Stanol ester is more readily dispersed into fat containing products, as 42% of the standard ingredient is considered fat. Thus, incorporating stanol ester into dairy beverages with lower fat levels, especially reduced fat/fat free milks, is problematic. In addition, the dietary ingredient must be handled in an appropriate manner for its introduction into milk. Once the dietary ingredient has been introduced into milk, formulation and process must be controlled in such a manner as to keep the dietary ingredient in suspension throughout a 60 day shelf life.

Therefore, there is an unmet consumer need for a palatable, stable dosage form for these ingredients in dairy beverages.

### SUMMARY OF THE INVENTION

We have found that stanol esters may be successfully incorporated into dairy beverages. This approach results in a palatable, stable dosage form for cholesterol lowering agents. The present invention is a dairy-based beverage including a stanol ester in an amount of from about 0.2 to about 2.0 wt. % of the beverage and, optionally, an additional ingredient selected from a stabilizer, a weighing agent, an emulsifier, and mixtures thereof, wherein each additional ingredient is in an amount of from about 0.01 to about 0.05 wt % of the beverage.

### DETAILED DESCRIPTION

The present invention provides an extended shelf-life product with acceptable palatability and mouthfeel characteristics, wherein the cholesterol lowering agent is dispersed throughout the milk matrix. The milk matrix contains among, other things, milk and a cholesterol lowering agent. Optionally, other ingredients are incorporated into the milk matrix, such as, but not limited to emulsifiers, stabilizers, fat, colors, flavors, flavor masking agents, sweeteners, weighing agents and the like.

According to the present invention, "milk" includes whole milk, skim milk, 2% milk, and 1 % milk, as well as soy milk.

While this invention encompasses stanol ester, sterol ester is also within the scope of this invention.

in addition to milk, other dairy beverages, including, but not limited to, milk shakes, frappes, smoothies, malteds, dairy-based prepackaged liquor beverages, dairy-based prepackaged coffee beverages, complete nutritional dairy beverages, dairy-based diet beverages, and dairy-based infant formulas.

A variety of techniques known to those having skill in the art can be used to disperse stanol ester into milk. However, process capabilities on hand will determine the best dispersion technique. For example, cold or warm stanol ester can be added directly to a cold milk batch with a high shear, in-tank homogenizer; stanol ester can be injected into the milk in front of an inline high shear mixer and recirculated with the milk; in the case of pre-pasteurization, melted stanol ester can be injected into the warm flow in front of the homogenizer during the start of the pasteurization process; shredded stanol ester can be added to about 140°F milk and mixed with a high shear mixer, and mixed or recirculated with the milk in a tank, and melted stanol ester can be injected into preheated milk directly in front of the homogenizer for the UHT process. The stanol ester can be dispersed and hydrated directly into cold (about 40°F) milk with using high shear equipment, e.g., Liquifier agitation.

Stabilizers suitable for use in the present invention are those capable of providing a prolonged dispersion of stanol ester in the milk matrix, preferably for at least 60 days for UHT and longer if aseptically packed. Preferably, the stabilizer is an edible hydrophilic colloid, i.e., a starch (including pre-gelatinized starch and chemically-modified starch), a gum (either natural or synthetic), or a chemically-modified polysaccharide. Preferred stabilizers suitable for use in the present invention include, but are not limited to, acacia, agar, algin, carrageenan, e.g., CM-611 (FMC Corp., Philadelphia, PA), gum arabic, gum ghatti, gum karaya, gum tragacanth, guar gum, e.g., TIC Guarcel 302 (TIC Gums Inc., Belcamp, MD), locust bean gum, e.g., Meyprodyn 200L (Rhodia Foods, Cranbury, NJ), xanthan gum, sodium alginate, sodium steryl lactolate, xanthan gum, cellulosic gums, such as, methyl cellulose, hydroxy ethyl cellulose, hydroxypropyl cellulose, hydroxypropyl methylcellulose, and carboxymethylcellulose, and mixtures thereof, with carrageenan being preferred. In addition, emulsifier salts, e.g., Joha KM2 (B.K. Landenburg Corp., Simi Valley, CA), weighting agents, e.g., SAIB FG (Eastman Chemical Co., Kingsport, TN), emulsifiers, e.g., K Emplex, SSL (American Ingredient Co., Kansas City, MO), Alphadim 90 NLK (American Ingredient Co., Kansas City, MO), crystal inhibitors, e.g., Caprol ET (AC Humco, Memphis, TN) and mixtures thereof may optionally be added.

Additionally, it may be possible to eliminate the need for stabilizers by substituting stanol with other selected fatty acids for a stabilizing ingredient.

According to the present invention, stanol ester is present in the dairy beverage from about 0.2 to about 2.0 wt %, preferably from about 0.2 to about 0.7 wt %. Additional ingredients that may be included in the formulation include from about 0.01 to about 0.05 wt% of a stabilizer, weighing agent, and emulsifier.

The use of ultra high temperature ("UHT") sterilization is not necessary to carry out the present invention. Although the combination of UHT treatment and refrigerated (38 to 45°F) storage enables a high quality, long-shelf life milk beverage, excellent quality would be expected from same formula processed with typical industry methods of pasteurization (HTST or LTLT techniques) for shorter shelf life products.

After dispersion, UHT sterilization can be carried out by any known method to those having skill in the art. Either direct or indirect UHT processing may be utilized. As mentioned above, while UHT processing provides for a longer shelf life, e.g., at least 60 days, milk beverage, it is not a necessary requirement for a milk beverage where shorter shelf life, e.g., less than 60 days, is acceptable. Where a shorter shelf life milk beverage is desired, standard milk industry pasteurization techniques provide for a higher quality product, e.g., better flavors, less thermal damage, and the like.

After UHT processing or pasteurization, the dairy beverage product can be near aseptically filled into purepak containers, preferably at from about 40 to about 70°F. After filling, all subsequent holding, warehousing, distribution, and retailing is done under refrigerated conditions (38 to 45°F). Preferably, the dairy beverage of the instant invention contains skim or 2% milk, stanol ester and carrageenan.

Briefly, a process for making the an extended shelf-life product' of the present invention involves sufficient heating/agitation to facilitate 100% dispersion of stanol ester and stabilizer, e.g., carrageenan, UHT sterilization via direct or indirect steam injection and near aseptic filling of purepak, glass or plastic, containers. All subsequent holding, warehousing, distribution and retailing should be under refrigerated conditions (38-45°F). Controlled temperatures will result in overall better quality.

If a shorter shelf-life product is desired then standard pasteurization would be utilized instead of UHT sterilization. For longer shelf life, UHT and aseptic packaging may be used.

One particular method of producing product according to the present invention involved melting stanol ester at about 140°F in a vessel. In a separate vessel, stabilizers, e.g., gums and/or salts, were mixed into milk. The milk-stabilizer mixture was then heated to about 145°F. After heating, stanol ester was added to the heated milk-stabilizer mixture. The resulting mixture was then mixed with a Braun handheld mixer for about 2 minutes. Following hand mixing, two-stage homogenization occurred at about140°F and 2000-2500/500 psi. Pasteurization at 190°F for 2 minutes was carried out prior to hot-filling sanitized containers. The filled containers were then cooled to less than about 50 °F, followed by refrigerated storage (about 38 to about 45°F).

After the invention has been described in general hereinbefore, the following examples are intended to illustrate details of the invention, without thereby limiting it in any matter.

### Examples

### Example 1

0.71 % stanol ester (1.7 g stanol ester /80z. serving) 2% milk products containing the stabilizers in Table 1 were prepared as follows: stanol ester (Raisio) was melted and dispersed in skim milk (at about 145°F), and mixed for about 2 minutes with a Braun mixer (Model No. 4169). Stabilizers and salts were than added to the solution and mixed with a Braun mixer (Model No. 4169) for 2 minutes. Two stage homogenization was then conducted at either 2000/500 2500/500 psi. When raw milk was the starting component, the milk was pasteurized at 190°F for 2 minutes. The hot milk was filled into sterilized containers. After packing, the containers were then transferred to less than about 20°F ice-cold water. The cooled containers were then stored in the refrigerator at from about 38 to about 45 °F for sensory and stability data.

Stability tests on the product were conducted by visual inspection. The carrageenan containing milks were considered to be the most stabile of all examined, Stability, viscosity, accelerated stability measurement (Quickscan) and assessment of additional stabilizers are continuing.

After two weeks of storage at 40°F, stability tests on the product using a QuickSCAN analyzer (Part No. 6605413, Beckman Coulter Inc., Fullerton, CA). Measuring the percentage of back-scattering referenced to a variable at day 0 provided the ability to identify the amount of creaming.

The scale used to determine creaming is as follows:
none - 0
slight - less than 10% back-scattering
moderate - 11-20% back-scattering
high - more than 20% back-scattering

**TABLE 1,**

| **2% Milk** | |
|---|---|
| **Stabilizer(s)** | **Scan Observations** |
| | |
| 0.03% carrageenan + 0.1% Meyprodyn 200L | Slight |
| | |
| 0.03% carrageenan | Slight |
| | |
| 0.3% Guarcel 302, Guar gum | High |
| | |
| 0.1% Joha KM2, Emulsifier salt | Moderate |
| | |
| 0.3% Joha KM2, Emulsifier salt | High |
| | |
| 0.01% carrageenan | Slight |
| | |
| 0.0115% carrageenan + 0.0344% SAIB FG, weighing agent | Slight |
| | |
| 0.0115% carrageenan + 0.114% Joha KM2 | Slight |
| | |
| 0.015% carrageenan | Slight |
| | |
| 0.02% carrageenan | Slight |
| | |
| 0.0175% carrageenan | Slight |
| | |
| 0.015% carrageenan + 0.01%Joha KM2 Emulsifier Salt | Slight |
| | |
| 0.0175% carragecnan + 0.02% Joha KM2 Emulsifier Salt | Slight |
| | |
| 0.0175% carrageenan + 0.05% Joha KM2 Emulsifier Salt | Slight |

### EXAMPLE 2

The procedure described in Example 1, above, was followed for the stabilizers described in Table 2, except that shim milk was used.

**TABLE 2,**

| **Skim Milk** | |
|---|---|
| **Stabilizer(s)** | **Scan Observations** |
| | |
| 0.02% carrageenan+0.7066% stanol ester | None |
| | |
| 0.1% sodium steryl stearate | High |
| | |
| 0.1% mono-diglycerides (Alphadin 90 NLK) | Slight |
| | |
| 0.1% polyglycerol esters (Caprol ET) | High |

### EXAMPLE 3

The procedure described in Example 1, above, was followed for the stabilizers described in Table 3, except that 1% milk was used.

**TABLE 3,**

| **1% Milk** | |
|---|---|
| **Stabilizer(s)** | **Scan Observations** |
| | |
| 0.02% carrageenan | None |

## Claims

1. A dairy-based beverage comprising stanol ester in an amount of from about 0.2 to about 2.0 wt. % of the beverage.

2. A dairy-based beverage of claim 1 further comprising an additional ingredient selected from the group consisting of a stabilizer, a weighing agent, an emulsifier, and mixtures thereof, wherein each additional ingredient is in an amount of from about 0.01 to about 0.05 wt % of the beverage.

3. A dairy-based beverage of claim 2 wherein the stabilizer is selected from the group consisting of an edible hydrophilic colloid, a gum, a modified polysaccharide, and mixtures thereof.

4. A dairy-based beverage of claim 3 wherein the stabilizer is selected from the group consisting of acacia, agar, algin, carrageenan, gum arabic, gum ghatti, gum karaya, gum tragacanth, guar gum, locust bean gum, xanthan gum, sodium alginate, sodium steryl lactolate, xanthan gum, cellulosic gums, such as ,methyl cellulose, hydroxy ethyl cellulose, hydroxypropyl cellulose, hydroxypropyl methylcellulose, and carboxymethylcellulose, and mixtures thereof.

5. A dairy-based beverage of claim 4 wherein the stabilizer is carrageenan.

6. A dairy-based beverage of claim 1 wherein the dairy-based beverage is selected from the group consisting of milk, milk shakes, frappes, smoothies, malteds, dairy-based prepackaged liquor beverages, dairy-based prepackaged coffee beverages, complete nutritional dairy beverages, dairy-based diet beverages, and dairy-based infant formulas.

7. A milk comprising from about 0.2 to about 0.7 wt% of a stanol ester and 0.01 to about 0.05 wt% of a stabilizer.

8. A milk of claim 7 wherein the stabilizer is carrageenan.

9. A milk of claim 7 wherein the milk is selected from the group consisting of whole milk, skim milk, 2% milk, 1% milk, and soy milk.

10. A milk of claim 7 further comprising from about 0.01 to about 0.05 wt % of a weighing agent, from about 0.01 to about 0.05 wt % an emulsifier, or both.
